# EUROPEAN PATENT APPLICATION

(11) **EP 4 428 587 A1**
(43) Date of publication of application: **11.09.2024**
(21) Application number: 22949021.4
(22) Date of filing: 21.10.2022
(51) Int. Cl.: G02B 6/12, G01C 19/72

(54) **OPTICAL GYROSCOPE DOUBLE-LAYER SIN-BASED INTEGRATED DRIVE CHIP**

(30) Priority: 30.06.2022 CN 202210754271
(71) Applicant: Shenzhen Osnav Industrial Co., Ltd., Shenzhen, Guangdong 518105 (CN)
(72) Inventor: LV, Haibin, Shenzhen, Guangdong 518105 (CN); LI, Hanzhou, Shenzhen, Guangdong 518105 (CN); JIAO, Feng, Shenzhen, Guangdong 518105 (CN)
(74) Representative: Williams Powell
(86) International application number: PCT/CN2022/126598
(87) International publication number: WO 2024/000936

(57) **Abstract**

An embodiment of the present disclosure discloses a double-layer SiN-based integrated driver chip for optical gyroscopes. A first implementation structure of the chip includes a first optical fibre-SiN waveguide coupler, a second optical fibre-SiN waveguide coupler, a first 3dB beam splitter, a polarizer, a second 3dB beam splitter, a first interlayer vertical coupler, a second interlayer vertical coupler, a first phase shifter, a second phase shifter, a third interlayer vertical coupler, a fourth interlayer vertical coupler, a third optical fibre-SiN waveguide coupler, and a fourth optical fibre-SiN waveguide coupler. According to the present disclosure, the excellent scalability of a SiN photonic platform and the excellent electro-optic modulation performance of electro-optic material are combined, an upper SiN waveguide may enable low-loss optical transmission, beam splitting, and beam polarizing across the chip, and a lower electro-optic phase shifter may be integrated with a full set of SiN photonic components, making the proposed chip architecture highly suitable for applications (e.g., fibre optic gyroscopes).

## Description

The present application claims priority to Chinese Patent Application No. 202210754271.0, filed to China National Intellectual Property Administration on June 30, 2022, and entitled "Double-Layer SiN-Based Integrated Driver Chip For Optical Gyroscopes", the contents of which are hereby incorporated by reference in its entirety.

### TECHNICAL FIELD

The present disclosure relates to the technical field of integrated optics and inertial sensing, in particular to a double-layer SiN-based integrated driver chip for optical gyroscopes.

### BACKGROUND ART

As angular rate sensors, fibre optic gyroscopes exhibit dominant advantages over traditional mechanical gyroscopes in terms of measurement accuracy, sensitivity, and reliability, making them widely applied in positioning, attitude control, and absolute orientation measurement. According to the classification of measurement accuracy, high-precision fibre optic gyroscopes are mainly applied in space technology, military applications, and scientific research fields, while low-cost mid-to-low precision fibre optic gyroscopes offer broad application prospects in numerous civil fields (e.g., automotive navigation, positioning, attitude control, and robotics).

Fibre optic gyroscopes generally rely on separated fibre optic devices for the generation, modulation, and detection of optical signals. Different fibre optic devices are connected via pigtail fusion splicing to form Sagnac interference optical loops. However, this approach unavoidably introduces a series of problems (e.g., parasitic reflection, increased insertion losses at connection points, and environmentally sensitive polarization mismatch), which will reduce system performance to varying degrees. Additionally, due to the adoption of a series of separated fibre optic devices, the dimensions and weights of systems will also be increased. With the recent development of integrated photonics, researchers have proposed integrated optical gyroscopes to solve the above-mentioned problems. All active and passive optical devices required by the optical gyroscopes except for sensing coils are integrated on the same chip to form an integrated optical driver chip. The integrated driver chip may be connected with the sensing coils (e.g., polarization-maintaining optical fibres or an ultra-low loss SiN waveguide) to form interferometric optical gyroscopes, thereby significantly reducing the dimensions, weights, power consumption, and costs of the optical gyroscopes. The integrated driver chip may play an important stimulativerole in promoting the rapid popularization of optical gyroscopes.

In interferometric optical gyroscopes, stable phase modulation is crucial to achieving high sensitivity and high accuracy in extracting Sagnac phase difference signals from the systems. This necessitates phase shifters to possess higher modulation responsivity, modulation linearity, large modulation bandwidth, and other performance characteristics. Currently, integrated phase shifters widely applied in fibre optic gyroscope systems mainly rely on the electro-optic effect in lithium niobate (LiNbO₃) waveguides on a bulk substrate. However, traditional LiNbO₃ waveguides based on the proton diffusion process have some drawbacks:
(1) The low refractive index difference between the waveguide and its cladding results in weaker light field confinement, thus requiring a large interval between a metal electrode and the waveguide, which in turn reduces the electro-optic modulation efficiency.
(2) The preparation process has strict requirements for the time, temperature, characteristics of exchange media, and the temperature and time of annealing for proton exchange, which is complex and high in cost.

Silicon nitride (SiN), as a CMOS-compatible material, may be processed using standard CMOS processes. The SiN waveguide with a silicon oxide cladding has a lower refractive index contrast, which reduces waveguide losses caused by sidewall roughness, chromatic dispersion, and sensitivity to waveguide dimension changes. Additionally, SiN has an optically transparent window that covers the near-infrared and visible light wavelength ranges, making it suitable for applications beyond optical communication. In recent years, therefore, a silicon nitride platform has become a common process platform for integrated optics. However, SiN lacks second-order nonlinear effects (thus lacking linear electro-optic effects), has relatively weak third-order nonlinear effects, and does not support electronic doping. As a result, it may not achieve efficient and fast electro-optic modulation.

The problem mentioned above may be solved by the heterogeneous integration of non-centrosymmetric thin-film materials on the low-refractive-index cladding (e.g., the silicon oxide (SiO₂) cladding) of the SiN platform to achieve high second-order nonlinearity and higher mode field confinement capacity, while still maintaining compatibility with the CMOS processing technology. Typical heterogeneous integration materials include ferroelectric materials (e.g., lithium niobate films (LiNbO₃)), compound semiconductors (e.g., aluminium-gallium-arsenide (AlGaAs) and aluminium-gallium-nitride (AlGaN) series), graphene, polymers, and other materials. Therefore, with thin-film deposition, epitaxial growth, and wafer bonding technologies, active devices that are initially incapable of being achieved or lack sufficient performance in the SiN platform may be realized and integrated on a single SiN chip via heterogeneous integration of the specific materials.

Recently, the heterogeneous integration of LiNbO₃ films with SiN/Si photonic integration platforms has received extensive attention and research interest. The SiN/Si-LiNbO₃ thin-film material system formed via heterogeneous integration combines the excellent scalability of the SiN/Si photonic platforms with the outstanding electro-optic modulation performance of LiNbO₃. The resulting electro-optic modulation devices (e.g., electro-optic phase and intensity modulators) exhibit advantages such as large modulation bandwidth, high modulation efficiency, low on-chip insertion losses, and high linearity. The performance level may rival the optimal level that is accessible to other material integration platforms, while further overcoming some traditional limitations. Not only does the underlying SiN/Si waveguides enable low-loss optical routing across the entire chip, but they also allow for the integration of the electro-optic modulators with a complete set of SiN/Si photonic components, which makes the proposed SiN/Si-LiNbO₃ platforms highly suitable for emerging applications. Therefore, integrated photonics based on the thin-film electro-optic materials formed via heterogeneous integration is becoming a popular field of the current academia and industry.

### SUMMARY

The technical problem to be solved by the embodiment of the present disclosure is to provide a double-layer SiN-based integrated driver chip for optical gyroscopes that improves stability and accuracy. Furthermore, the chip is suitable for application in fibre optic gyroscopes working at wavelength ranges (e.g., 830 nm, 850 nm, 1310 nm, and 1550 nm).
To solve the above-mentioned technical problem, the embodiment of the present disclosure provides a double-layer SiN-based integrated driver chip for optical gyroscopes, which includes, from top to bottom, a SiO₂ upper cladding, a SiN upper layer, a SiO₂ intermediate layer, a SiN lower layer, an electro-optic material thin-film layer, a SiO₂ lower cladding, and a Si substrate layer, and the chip is of a first implementation structure or a second implementation structure, wherein
the first implementation structure of the chip includes a first optical fibre-SiN waveguide coupler, a second optical fibre-SiN waveguide coupler, a first 3dB beam splitter, a polarizer, a second 3dB beam splitter, an upper waveguide taper of a first interlayer vertical coupler, an upper waveguide taper of a second interlayer vertical coupler, an upper waveguide taper of a third interlayer vertical coupler, an upper waveguide taper of a fourth interlayer vertical coupler, a third optical fibre-SiN waveguide coupler, and a fourth optical fibre-SiN waveguide coupler, which are implemented in the SiN upper layer; a lower waveguide taper of the first interlayer vertical coupler, a lower waveguide taper of the second interlayer vertical coupler, a first phase shifter, a second phase shifter, a lower waveguide taper of the third interlayer vertical coupler, and a lower waveguide taper of the fourth interlayer vertical coupler, which are implemented in the SiN lower layer;
an external optical source is connected with one end of the first optical fibre-SiN waveguide coupler via an optical fibre; an external photodetector is connected with one end of the second optical fibre-SiN waveguide coupler via an optical fibre; the other end of the first optical fibre-SiN waveguide coupler and the other end of the second optical fibre-SiN waveguide coupler are respectively connected with two branches of the first 3dB beam splitter; a base waveguide of the first 3dB beam splitter is connected with one end of the polarizer; the other end of the polarizer is connected with a base waveguide of the second 3dB beam splitter; two branches of the second 3dB beam splitter are respectively connected with one end of the upper waveguide taper of the first interlayer vertical coupler and one end of the upper waveguide taper of the second interlayer vertical coupler; spaced by the SiO₂ intermediate layer with certain thickness, the lower waveguide taper of the first interlayer vertical coupler and the lower waveguide taper of the second interlayer vertical coupler respectively correspond to positions right below the upper waveguide taper of the first interlayer vertical coupler and the upper waveguide taper of the second interlayer vertical coupler; one end of the lower waveguide taper of the first interlayer vertical coupler and one end of the lower waveguide taper of the second interlayer vertical coupler are respectively connected with one end of the first phase shifter and one end of the second phase shifter; the other end of the first phase shifter and the other end of the second phase shifter are respectively connected with one end of the lower waveguide taper of the third interlayer vertical coupler and one end of the lower waveguide taper of the fourth interlayer vertical coupler; spaced by the SiO₂ intermediate layer with certain thickness, the upper waveguide taper of the third interlayer vertical coupler and the upper waveguide taper of the fourth interlayer vertical coupler respectively correspond to positions right above the lower waveguide taper of the third interlayer vertical coupler and the lower waveguide taper of the fourth interlayer vertical coupler; one end of the upper waveguide taper of the third interlayer vertical coupler and one end of the upper waveguide taper of the fourth interlayer vertical coupler are respectively connected with one end of the third optical fibre-SiN waveguide coupler and one end of the fourth optical fibre-SiN waveguide coupler; the other end of the third optical fibre-SiN waveguide coupler and the other end of the fourth optical fibre-SiN waveguide coupler are respectively connected with two ends of an external optical fibre ring;
the second implementation structure of the chip includes a first optical fibre-SiN waveguide coupler, a second optical fibre-SiN waveguide coupler, a first 3dB beam splitter, a polarizer, a second 3dB beam splitter, an upper waveguide taper of a first interlayer vertical coupler, and an upper waveguide taper of a second interlayer vertical coupler, which are implemented in the SiN upper layer; a lower waveguide taper of the first interlayer vertical coupler, a lower waveguide taper of the second interlayer vertical coupler, a first phase shifter, a second phase shifter, a first optical fibre-SiN/electro-optic material hybrid waveguide coupler, and a second optical fibre-SiN/electro-optic material hybrid waveguide coupler, which are implemented in the SiN lower layer;
an external optical source is connected with one end of the first optical fibre-SiN waveguide coupler via an optical fibre; an external photodetector is connected with one end of the second optical fibre-SiN waveguide coupler via an optical fibre; the other end of the first optical fibre-SiN waveguide coupler and the other end of the second optical fibre-SiN waveguide coupler are respectively connected with two branches of the first 3dB beam splitter; a base waveguide of the first 3dB beam splitter is connected with one end of the polarizer; the other end of the polarizer is connected with a base waveguide of the second 3dB beam splitter; two branches of the second 3dB beam splitter are respectively connected with one end of the upper waveguide taper of the first interlayer vertical coupler and one end of the upper waveguide taper of the second interlayer vertical coupler; spaced by the SiO₂ intermediate layer with certain thickness, the lower waveguide taper of the first interlayer vertical coupler and the lower waveguide taper of the second interlayer vertical coupler respectively correspond to positions right below the upper waveguide taper of the first interlayer vertical coupler and the upper waveguide taper of the second interlayer vertical coupler; one end of the lower waveguide taper of the first interlayer vertical coupler and one end of the lower waveguide taper of the second interlayer vertical coupler are respectively connected with one end of the first phase shifter and one end of the second phase shifter; the other end of the first phase shifter and the other end of the second phase shifter are respectively connected with one end of the first optical fibre-SiN/electro-optic material hybrid waveguide coupler and one end of the second optical fibre-SiN/electro-optic material hybrid waveguide coupler; and the other end of the first optical fibre-SiN/electro-optic material hybrid waveguide coupler and the other end of the second optical fibre-SiN/electro-optic material hybrid waveguide coupler are respectively connected with two ends of an external optical fibre ring.

Further, a working wavelength range of the chip is one or more of 830 nm, 850 nm, 1310 nm, and 1550 nm.

Further, a polycrystalline silicon layer for absorbing stray light in the chip structure is further disposed on the SiO₂ upper cladding.

Further, the SiO₂ intermediate layer is located between the SiN upper layer and the SiN lower layer.

Further, the optical fibre-waveguide couplers achieve mode field diameter matching between a waveguide and a polarization-maintaining optical fibre at an end face of the chip via an inversed taper structure.

Further, the optical fibre-SiN/electro-optic material hybrid waveguide couplers achieve mode field diameter matching between a hybrid waveguide and a polarization-maintaining optical fibre at the end face of the chip via an inversed taper structure. Further, the 3dB beam splitters are realized using Y-shaped beam splitters or 1 × 2 multimode interferometer beam splitters.

Further, the polarizer is made up of a bent waveguide structure with a fixed bending radius or a continuous curvature.

Further, the interlayer vertical couplers are of upside-down taper structures that enable the coupling of light between the upper SiN waveguide and the lower SiN-electro-optic material hybrid waveguide.

Further, the first phase shifter and the second phase shifter achieve phase modulation through the linear electro-optic effect of heterogeneously integrated thin-film electro-optic materials, which are of hybrid SiN waveguide structures with bottom-bonded electro-optic material thin-film layers.

The present disclosure has the following beneficial effects:
1. The double-layer SiN-based integrated driver chip for optical gyroscopes based on the electro-optic phase shifter heterogeneously integrated with the thin-film electro-optic material incorporates the excellent scalability of the SiN photonic platform and the excellent electro-optic modulation performance of the electro-optic material, the upper SiN waveguide may enable low-loss optical transmission, beam splitting, and beam polarizing across the chip, and the lower electro-optic phase shifter may be integrated with a full set of SiN photonic components, making the proposed chip architecture highly suitable for applications (e.g., fibre optic gyroscopes).
2. The design of the phase shifter based on the linear electro-optic effect of the heterogeneously integrated thin-film electro-optic material ensures high linearity, high bandwidth (>1 GHz), and low insertion losses (<1 dB) within the near-infrared wavelength range during phase modulation.
3. The SiN material with a small thermal-optic coefficient ensures minimal impact on the optical transmission characteristics of devices due to environmental temperature variations, which, in turn, suppresses the temperature drift effect and improves the stability of the gyroscope. Additionally, the SiN material exhibits high transparency within the near-infrared wavelength range. Therefore, the fibre optic gyroscope based on the SiN integrated optical chip may work across the short-wavelength region, resulting in a larger scale factor.
4. By employing integrated optical devices, parasitic reflection, insertion losses at connection points, polarization mismatch, and other problems are prevented, thus further enhancing system reliability, reducing system volume, and lowering system cost.

### BRIEF DESCRIPTION OF THE DRAWINGS

FIG. 1 is a schematic diagram illustrating a system composition of a double-layer SiN-based integrated driver chip for optical gyroscopes according to an embodiment of the present disclosure.
FIG. 2 is a perspective schematic diagram illustrating a first implementation structure of a double-layer SiN-based integrated driver chip for optical gyroscopes according to an embodiment of the present disclosure.
FIG. 3 is an optical path diagram illustrating a first implementation structure of a double-layer SiN-based integrated driver chip for optical gyroscopes according to an embodiment of the present disclosure.
FIG. 4 is a perspective schematic diagram illustrating a second implementation structure of a double-layer SiN-based integrated driver chip for optical gyroscopes according to an embodiment of the present disclosure.
FIG. 5 is an optical path diagram illustrating a second implementation structure of a double-layer SiN-based integrated driver chip for optical gyroscopes according to an embodiment of the present disclosure.
FIG. 6 is a structural schematic diagram illustrating an interlayer vertical coupler according to an embodiment of the present disclosure.
FIG. 7 is a structural schematic diagram illustrating a polarizer according to an embodiment of the present disclosure;
FIG. 8 is a structural schematic diagram illustrating a phase shifter according to an embodiment of the present disclosure.

### Brief description of reference signs:

Polycrystalline silicon layer 1, SiO₂ upper cladding 2, SiN upper layer 3, SiO₂ intermediate layer 4, SiN lower layer 5, electro-optic material thin-film layer 6, SiO₂ lower cladding 7, Si substrate layer 8, first optical fibre-SiN waveguide coupler 1-1, second optical fibre-SiN waveguide coupler 1-2, first 3dB beam splitter 9, polarizer 10, second 3dB beam splitter 11, first interlayer vertical coupler 5-1, second interlayer vertical coupler 5-2, first phase shifter 6-1, second phase shifter 6-2, third interlayer vertical coupler 5-3, fourth interlayer vertical coupler 5-4, third optical fibre-SiN waveguide coupler 7-1, and fourth optical fibre-SiN waveguide coupler 7-2; the arrow direction with a reference sign 12 indicates the direction in which an external optical source inputs light, while the arrow direction with a reference sign 13 indicates the direction in which the light is output to an external detector.

### DETAILED DESCRIPTION OF THE EMBODIMENTS

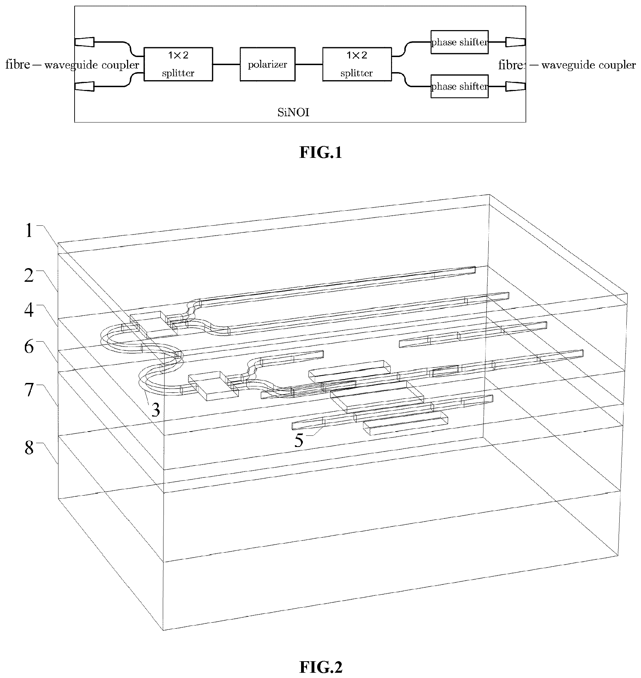

According to the embodiment of the present disclosure, a double-layer SiN-based integrated driver chip for optical gyroscopes has a cascade composition from top to bottom in sequence: a SiO₂ upper cladding 2, a SiN upper layer 3, a SiO₂ intermediate layer 4, a SiN lower layer 5, an electro-optic material thin-film layer 6, a SiO₂ lower cladding 7, and a Si substrate layer 8. Additionally, a polycrystalline silicon layer 1 for absorbing stray light in the chip structure is further disposed on the SiO₂ upper cladding 2. A system composition of a double-layer SiN-based integrated driver chip for optical gyroscopes in an embodiment of the present disclosure is shown in FIG. 1.

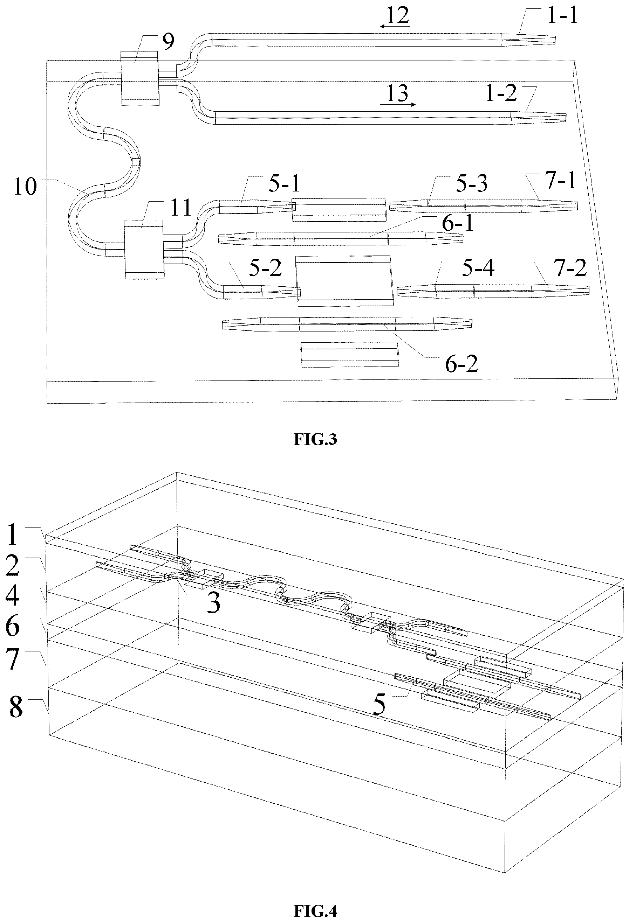

Referring to FIGS. 2 and 3, a first implementation structure of the double-layer SiN-based integrated driver chip for optical gyroscopes in the embodiment of the present disclosure includes a first optical fibre-SiN waveguide coupler 1-1, a second optical fibre-SiN waveguide coupler 1-2, a first 3dB beam splitter 9, a polarizer 10, a second 3dB beam splitter 11, a first interlayer vertical coupler 5-1, a second interlayer vertical coupler 5-2, a first phase shifter 6-1, a second phase shifter 6-2, a third interlayer vertical coupler 5-3, a fourth interlayer vertical coupler 5-4, a third optical fibre-SiN waveguide coupler 7-1, and a fourth optical fibre-SiN waveguide coupler 7-2.

An external optical source is connected with one end of the first optical fibre-SiN waveguide coupler 1-1 via an optical fibre; an external photodetector is connected with one end of the second optical fibre-SiN waveguide coupler 1-2 via an optical fibre; the other end of the first optical fibre-SiN waveguide coupler 1-1 and the other end of the second optical fibre-SiN waveguide coupler 1-2 are respectively connected with two branches of the first 3dB beam splitter 9; a base waveguide of the first 3dB beam splitter 9 is connected with one end of the polarizer 10; the other end of the polarizer 10 is connected with a base waveguide of the second 3dB beam splitter 11; two branches of the second 3dB beam splitter 11 are respectively connected with one end of an upper waveguide taper of the first interlayer vertical coupler 5-1 and one end of an upper waveguide taper of the second interlayer vertical coupler 5-2; spaced by the SiO₂ intermediate layer 4 with certain thickness, a lower waveguide taper of the first interlayer vertical coupler 5-1 and a lower waveguide taper of the second interlayer vertical coupler 5-2 respectively correspond to positions right below the upper waveguide taper of the first interlayer vertical coupler 5-1 and the upper waveguide taper of the second interlayer vertical coupler 5-2; one end of the lower waveguide taper of the first interlayer vertical coupler 5-1 and one end of the lower waveguide taper of the second interlayer vertical coupler 5-2 are respectively connected with one end of the first phase shifter 6-1 and one end of the second phase shifter 6-2; the other end of the first phase shifter 6-1 and the other end of the second phase shifter 6-2 are respectively connected with a lower waveguide taper of the third interlayer vertical coupler 5-3 and a lower waveguide taper of the fourth interlayer vertical coupler 5-4; spaced by the SiO₂ intermediate layer 4 with certain thickness, an upper waveguide taper of the third interlayer vertical coupler 5-3 and an upper waveguide taper of the fourth interlayer vertical coupler 5-4 respectively correspond to positions right above the lower waveguide taper of the third interlayer vertical coupler 5-3 and the lower waveguide taper of the fourth interlayer vertical coupler 5-4; one end of the upper waveguide taper of the third interlayer vertical coupler 5-3 and one end of the upper waveguide taper of the fourth interlayer vertical coupler 5-4 are respectively connected with one end of the third optical fibre-SiN waveguide coupler 7-1 and one end of the fourth optical fibre-SiN waveguide coupler 7-2; and the other end of the third optical fibre-SiN waveguide coupler 7-1 and the other end of the fourth optical fibre-SiN waveguide coupler 7-2 are respectively connected with two ends of an external fibre optic ring.

Taking the structure shown in FIG. 3 as an example, light output from the external optical source is coupled to the first optical fibre-SiN waveguide coupler 1-1 on the chip via the optical fibre in the direction as indicated by an arrow 12, and the light output from the first optical fibre-SiN waveguide coupler 1-1 includes two different polarization modes (quasi-TEo and quasi-TM₀); after passing through the first 3dB beam splitter 9, the light, in two different polarization modes, enters the polarizer 10, and due to the polarization selection of the polarizer 10, light in the quasi-TM₀ mode leaks to the SiO₂ upper cladding, while only light in the quasi-TEo remains in the SiN waveguide; the light in the quasi-TEo enters the second 3dB beam splitter 11 and is split into two beams, and one beam of light enters the lower waveguide taper of the first interlayer vertical coupler 5-1 via interlayer vertical coupling along the upper waveguide taper of the first interlayer vertical coupler 5-1; after undergoing phase modulation by the first phase shifter 6-1, the light enters the lower waveguide taper of the third interlayer vertical coupler 5-3, then enters the upper waveguide taper of the third interlayer vertical coupler 5-3 via interlayer vertical coupling, and is finally coupled to the fibre optic ring via the third optical fibre-SiN waveguide coupler 7-1; the other beam of light enters the lower waveguide taper of the second interlayer vertical coupler 5-2 via interlayer coupling along the upper waveguide taper of the second interlayer vertical coupler 5-2; after undergoing phase modulation by the second phase shifter 6-2, the light enters the lower waveguide taper of the fourth interlayer vertical coupler 5-4, then enters the upper waveguide taper of the fourth interlayer vertical coupler 5-4 via interlayer vertical coupling, and is finally coupled to the fibre optic ring via the fourth optical fibre-SiN waveguide coupler 7-2; and the two beams of light respectively propagate oppositely in the clockwise direction and the anticlockwise direction in the fibre optic ring, and meet the coherence condition. When the fibre optic ring rotates around its central axis, a Sagnac effect occurs, resulting in changes in interference light intensity returning to the second 3dB splitter 11 along the path; and the interference light signal is output to the external photodetector in the direction as indicated by an arrow 13 via coupling after passing through the second 3dB coupler 11, the polarizer 10, the first 3dB beam splitter 9, and the second optical fibre-SiN waveguide coupler 1-2. This allows for the detection of varying light intensity, which, after processing, provides rotational angular velocity information.

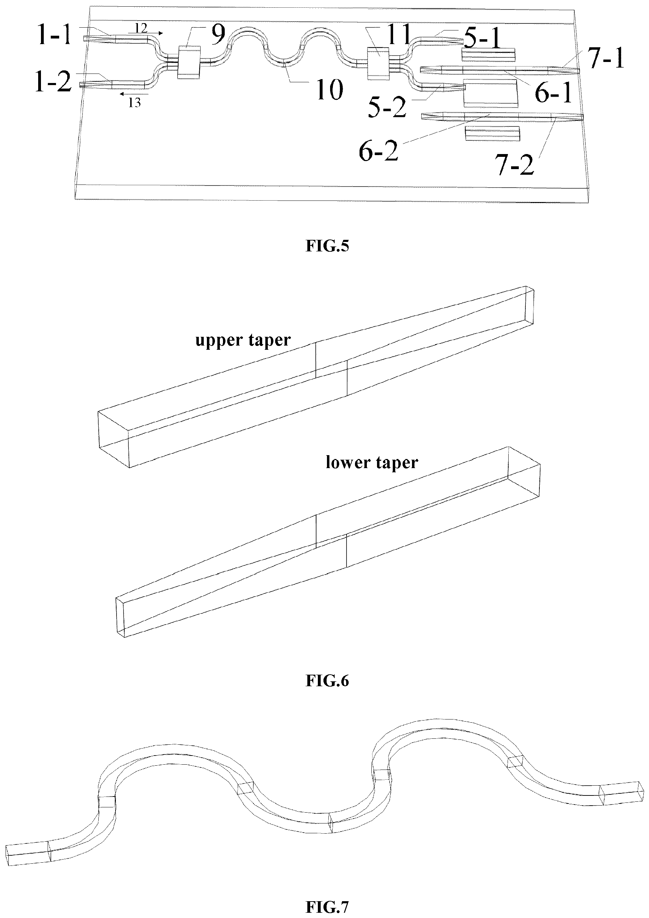

Referring to FIGS. 4 and 5, a second implementation structure of the double-layer SiN-based integrated driver chip for optical gyroscopes in the embodiment of the present disclosure includes a first optical fibre-SiN waveguide coupler 1-1, a second optical fibre-SiN waveguide coupler 1-2, a first 3dB beam splitter 9, a polarizer 10, a second 3dB beam splitter 11, a first interlayer vertical coupler 5-1, a second interlayer vertical coupler 5-2, a first phase shifter 6-1, a second phase shifter 6-2, a first optical fibre-SiN/electro-optic material hybrid waveguide coupler 7-1, and a second optical fibre-SiN/electro-optic material hybrid waveguide coupler 7-2.

An external optical source is connected with one end of the first optical fibre-SiN waveguide coupler 1-1 via an optical fibre; an external photodetector is connected with one end of the second optical fibre-SiN waveguide coupler 1-2 via an optical fibre; the other end of the first optical fibre-SiN waveguide coupler 1-1 and the other end of the second optical fibre-SiN waveguide coupler 1-2 are respectively connected with two branches of the first 3dB beam splitter 9; a base waveguide of the first 3dB beam splitter 9 is connected with one end of the polarizer 10; the other end of the polarizer 10 is connected with a base waveguide of the second 3dB beam splitter 11; two branches of the second 3dB beam splitter 11 are respectively connected with one end of an upper waveguide taper of the first interlayer vertical coupler 5-1 and one end of an upper waveguide taper of the second interlayer vertical coupler 5-2; spaced by the SiO₂ intermediate layer 4 with certain thickness, a lower waveguide taper of the first interlayer vertical coupler 5-1 and a lower waveguide taper of the second interlayer vertical coupler 5-2 respectively correspond to positions right below the upper waveguide taper of the first interlayer vertical coupler 5-1 and the upper waveguide taper of the second interlayer vertical coupler 5-2; one end of the lower waveguide taper of the first interlayer vertical coupler 5-1 and one end of the lower waveguide taper of the second interlayer vertical coupler 5-2 are respectively connected with one end of the first phase shifter 6-1 and one end of the second phase shifter 6-2; the other end of the first phase shifter 6-1 and the other end of the second phase shifter 6-2 are respectively connected with one end of the first optical fibre-SiN/electro-optic material hybrid waveguide coupler 7-1 and one end of the second optical fibre-SiN/electro-optic material hybrid waveguide coupler 7-2; and the other end of the first optical fibre-SiN/electro-optic material hybrid waveguide coupler 7-1 and the other end of the second optical fibre-SiN/electro-optic material hybrid waveguide coupler 7-2 are respectively connected with two ends of an external fibre optic ring.

Taking the structure shown in FIG. 5 as an example, light output from the external optical source is coupled to the first optical fibre-SiN waveguide coupler 1-1 on the chip via the optical fibre in the direction as indicated by an arrow 12, and the light output from the first optical fibre-SiN waveguide coupler 1-1 includes two different polarization modes (quasi-TEo and quasi-TM₀); after passing through the first 3dB beam splitter 9, the light, in two different polarization modes, enters the polarizer 10, and due to the polarization selection of the polarizer 10, light in the quasi-TM₀ mode leaks to the SiO₂ upper cladding, while only light in the quasi-TEo remains in the SiN waveguide; the light in the quasi-TEo enters the second 3dB beam splitter 11 and is split into two beams, and one beam of light enters the lower waveguide taper of the first interlayer vertical coupler 5-1 via interlayer vertical coupling along the upper waveguide taper of the first interlayer vertical coupler 5-1; after undergoing phase modulation by the first phase shifter 6-1, the light is coupled to the fibre optic ring via the first optical fibre-SiN/electro-optic material hybrid waveguide coupler 7-1; the other beam of light enters the lower waveguide taper of the second interlayer vertical coupler 5-2 via interlayer coupling along the upper waveguide taper of the second interlayer vertical coupler 5-2; after undergoing phase modulation by the second phase shifter 6-2, the light is coupled to the fibre optic ring via the second optical fibre-SiN/electro-optic material hybrid waveguide coupler 7-2; and the two beams of light respectively propagate oppositely in the clockwise direction and the anticlockwise direction in the fibre optic ring, and meet the coherence condition. When the fibre optic ring rotates around its central axis, a Sagnac effect occurs, resulting in changes in interference light intensity returning to the second 3dB splitter 11 along the path; and the interference light signal is output to the external photodetector in the direction as indicated by an arrow 13 via coupling after passing through the second 3dB coupler 11, the polarizer 10, the first 3dB beam splitter 9, and the second optical fibre-SiN waveguide coupler 1-2. This allows for the detection of varying light intensity, which, after processing, provides rotational angular velocity information. According to the present disclosure, the polarizer is made up of a bent waveguide structure with a continuous curvature.

As an implementation, the optical fibre-SiN waveguide couplers achieve mode field matching between the SiN waveguide and a polarization-maintaining optical fibre at an end face via an inversed taper structure. In the embodiment, the minimum width and taper length of the waveguide in the inversed taper structure are optimized to achieve mode field matching with the ultra-fine polarization-maintaining optical fibre (cladding diameter of 40 µm, core diameter of 3 µm) within the near-infrared wavelength range, with the coupling efficiency greater than 90%.

As an implementation, the optical fibre-SiN/electro-optic material hybrid waveguide coupler achieves mode field matching between a SiN-electro-optic material hybrid waveguide and a polarization-maintaining optical fibre at the end face via an inversed taper structure. In the embodiment, the minimum width and taper length of the SiN waveguide in the inversed taper structure are optimized to achieve mode field matching with the ultra-fine polarization-maintaining fibre (cladding diameter of 40 µm, core diameter of 3 µm) within the near-infrared wavelength range, with the coupling efficiency greater than 90%.

As an implementation, the interlayer vertical coupler is of an upside-down taper structure that enables the coupling of the light between an upper SiN waveguide and a lower SiN-electro-optic material hybrid waveguide, as shown in FIG. 6, and design parameters include minimum widths and lengths of the upper taper and the lower taper and the thickness of the SiO₂ intermediate layer. In the embodiment, the upper SiN waveguide has dimensions of 1200 × 45 nm, while the lower hybrid SiN-electro-optic material waveguide has dimensions of 1200 × 100 nm. The minimum width and length of the optimized upper taper are 250 nm and 2.5 µm, respectively, while the minimum width and length of the optimized lower taper are 150 nm and 2.5 µm, respectively. The thickness of the SiO₂ intermediate layer is 1 µm, corresponding to the interlayer coupling efficiency of 95%.

As an implementation, the first 3dB beam splitter 9 and the second 3dB beam splitter 11 are both achieved by a Y-type beam splitter. In the embodiment, by optimizing the design of the Y-shaped structure, the transmittance of the light in the quasi-TEo mode at each port is >49% within the near-infrared wavelength range.

As an implementation, the polarizer 10 consists of bent waveguides with continuously distributed curvatures, as shown in FIG. 7. Within the desired working wavelength range, the following objectives are fulfilled by properly designing the lateral dimensions of the waveguide, the distribution of the curvatures in the bending of the waveguide, and the length of the bent waveguide: (1) Only the quasi-TEo/TMo modes are supported within the waveguide, with a sufficient large effective refractive index difference therebetween, resulting in higher bent radiation losses for the TMo mode compared to the TEo mode; (2) the polarization extinction ratio between the quasi-TEo/TMo modes is greater than 50 dB, and the propagation loss of the quasi-TEo mode is smaller than 0.5 dB; and (3) the curvatures are continuously distributed from the input end to the output end, avoiding scattering loss caused by the discontinued distribution of the curvatures in the TEo mode. In the embodiment, the dimensions of the SiN waveguide are 1200 × 45 nm, the minimum bending radius is 500 µm, and the total length of the bent waveguide is 5 mm.

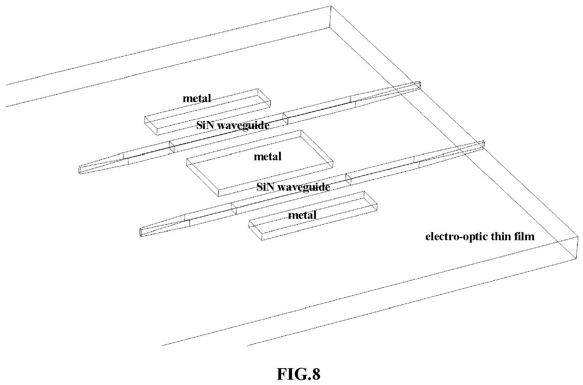

As an implementation, the phase shifter is implemented using the hybrid SiN waveguide structure with a bottom-bonded electro-optic material layer. A LiNbO₃ crystal is selected as the thin-film electro-optic material, with an electro-optic coefficient r₃₃ of 30 pm/V. The crystal is cut through either an x-cut scheme or a y-cut scheme. The structural design of the phase shifter is shown in FIG. 8, the thin-film electro-optic material is bonded at the bottom of the SiN waveguide, and a push-pull structure is used. The phase shifter includes the SiO₂ cladding, metal electrodes, the SiN waveguide, the thin-film electro-optic material, the SiO₂ cladding, and the Si substrate. By properly optimizing the thickness of the thin-film electro-optic material, spacing between the two electrodes, and the width of the SiN waveguide, the modulation efficiency of the phase shifter is maximized, and meanwhile, waveguide transmission loss is minimized. In the embodiment, the hybrid SiN-LiNbO₃ waveguide has the dimensions of 1200 × 100 nm, with a LiNbO₃ thin-film thickness of 1 µm. The spacing between the electrodes is 6.5 µm, and the modulation efficiency of the phase shifter is approximately 2 V cm.

According to the present disclosure, the stability and reliability of the fibre optic gyroscope may be effectively improved while the precision thereof is ensured, multiple performances of the fibre optic gyroscope can be improved, and smaller size, lower power consumption, lower cost and more simplified structural design and process of the fibre optic gyroscope can be achieved.

## Claims

1. A double-layer SiN-based integrated driver chip for optical gyroscopes, **characterized in that** the chip comprises, from top to bottom, a SiO₂ upper cladding, a SiN upper layer, a SiO₂ intermediate layer, a SiN lower layer, an electro-optic material thin-film layer, a SiO₂ lower cladding, and a Si substrate layer, and the chip is of a first implementation structure or a second implementation structure, wherein
the first implementation structure of the chip comprises a first optical fibre-SiN waveguide coupler, a second optical fibre-SiN waveguide coupler, a first 3dB beam splitter, a polarizer, a second 3dB beam splitter, an upper waveguide taper of a first interlayer vertical coupler, an upper waveguide taper of a second interlayer vertical coupler, an upper waveguide taper of a third interlayer vertical coupler, an upper waveguide taper of a fourth interlayer vertical coupler, a third optical fibre-SiN waveguide coupler, and a fourth optical fibre-SiN waveguide coupler, which are implemented in the SiN upper layer; a lower waveguide taper of the first interlayer vertical coupler, a lower waveguide taper of the second interlayer vertical coupler, a first phase shifter, a second phase shifter, a lower waveguide taper of the third interlayer vertical coupler, and a lower waveguide taper of the fourth interlayer vertical coupler, which are implemented in the SiN lower layer;
an external optical source is connected with one end of the first optical fibre-SiN waveguide coupler via an optical fibre; an external photodetector is connected with one end of the second optical fibre-SiN waveguide coupler via an optical fibre; the other end of the first optical fibre-SiN waveguide coupler and the other end of the second optical fibre-SiN waveguide coupler are respectively connected with two branches of the first 3dB beam splitter; a base waveguide of the first 3dB beam splitter is connected with one end of the polarizer; the other end of the polarizer is connected with a base waveguide of the second 3dB beam splitter; two branches of the second 3dB beam splitter are respectively connected with one end of the upper waveguide taper of the first interlayer vertical coupler and one end of the upper waveguide taper of the second interlayer vertical coupler; spaced by the SiO₂ intermediate layer with certain thickness, the lower waveguide taper of the first interlayer vertical coupler and the lower waveguide taper of the second interlayer vertical coupler respectively correspond to positions right below the upper waveguide taper of the first interlayer vertical coupler and the upper waveguide taper of the second interlayer vertical coupler; one end of the lower waveguide taper of the first interlayer vertical coupler and one end of the lower waveguide taper of the second interlayer vertical coupler are respectively connected with one end of the first phase shifter and one end of the second phase shifter; the other end of the first phase shifter and the other end of the second phase shifter are respectively connected with one end of the lower waveguide taper of the third interlayer vertical coupler and one end of the lower waveguide taper of the fourth interlayer vertical coupler; spaced by the SiO₂ intermediate layer with certain thickness, the upper waveguide taper of the third interlayer vertical coupler and the upper waveguide taper of the fourth interlayer vertical coupler respectively correspond to positions right above the lower waveguide taper of the third interlayer vertical coupler and the lower waveguide taper of the fourth interlayer vertical coupler; one end of the upper waveguide taper of the third interlayer vertical coupler and one end of the upper waveguide taper of the fourth interlayer vertical coupler are respectively connected with one end of the third optical fibre-SiN waveguide coupler and one end of the fourth optical fibre-SiN waveguide coupler; the other end of the third optical fibre-SiN waveguide coupler and the other end of the fourth optical fibre-SiN waveguide coupler are respectively connected with two ends of an external fibre optic ring;
the second implementation structure of the chip comprises a first optical fibre-SiN waveguide coupler, a second optical fibre-SiN waveguide coupler, a first 3dB beam splitter, a polarizer, a second 3dB beam splitter, an upper waveguide taper of a first interlayer vertical coupler, and an upper waveguide taper of a second interlayer vertical coupler, which are implemented in the SiN upper layer; a lower waveguide taper of the first interlayer vertical coupler, a lower waveguide taper of the second interlayer vertical coupler, a first phase shifter, a second phase shifter, a first optical fibre-SiN/electro-optic material hybrid waveguide coupler, and a second optical fibre-SiN/electro-optic material hybrid waveguide coupler, which are implemented in the SiN lower layer;
an external optical source is connected with one end of the first optical fibre-SiN waveguide coupler via an optical fibre; an external photodetector is connected with one end of the second optical fibre-SiN waveguide coupler via an optical fibre; the other end of the first optical fibre-SiN waveguide coupler and the other end of the second optical fibre-SiN waveguide coupler are respectively connected with two branches of the first 3dB beam splitter; a base waveguide of the first 3dB beam splitter is connected with one end of the polarizer; the other end of the polarizer is connected with a base waveguide of the second 3dB beam splitter; two branches of the second 3dB beam splitter are respectively connected with one end of the upper waveguide taper of the first interlayer vertical coupler and one end of the upper waveguide taper of the second interlayer vertical coupler; spaced by the SiO₂ intermediate layer with certain thickness, the lower waveguide taper of the first interlayer vertical coupler and the lower waveguide taper of the second interlayer vertical coupler respectively correspond to positions right below the upper waveguide taper of the first interlayer vertical coupler and the upper waveguide taper of the second interlayer vertical coupler; one end of the lower waveguide taper of the first interlayer vertical coupler and one end of the lower waveguide taper of the second interlayer vertical coupler are respectively connected with one end of the first phase shifter and one end of the second phase shifter; the other end of the first phase shifter and the other end of the second phase shifter are respectively connected with one end of the first optical fibre-SiN/electro-optic material hybrid waveguide coupler and one end of the second optical fibre-SiN/electro-optic material hybrid waveguide coupler; and the other end of the first optical fibre-SiN/electro-optic material hybrid waveguide coupler and the other end of the second optical fibre-SiN/electro-optic material hybrid waveguide coupler are respectively connected with two ends of an external fibre optic ring.

2. The double-layer SiN-based integrated driver chip for optical gyroscopes as claimed in claim 1, **characterized in that** a working wavelength range of the chip is one or more of 830 nm, 850 nm, 1310 nm, and 1550 nm.

3. The double-layer SiN-based integrated driver chip for optical gyroscopes as claimed in claim 1, **characterized in that** a polycrystalline silicon layer for absorbing stray light in the chip structure is further disposed on the SiO₂ upper cladding.

4. The double-layer SiN-based integrated driver chip for optical gyroscopes as claimed in claim 1, **characterized in that** the SiO₂ intermediate layer is located between the SiN upper layer and the SiN lower layer.

5. The double-layer SiN-based integrated driver chip for optical gyroscopes as claimed in claim 1, **characterized in that** the optical fibre-SiN waveguide couplers achieve mode field diameter matching between waveguides and polarization-maintaining optical fibres at an end face of the chip via an inversed taper structure.

6. The double-layer SiN-based integrated driver chip for optical gyroscopes as claimed in claim 1, **characterized in that** the optical fibre-SiN/electro-optic material hybrid waveguide couplers achieve mode field diameter matching between hybrid waveguides and the polarization-maintaining optical fibres at the end face of the chip via the inversed taper structure.

7. The double-layer Sin-based integrated driver chip for optical gyroscopes as claimed in claim 1, **characterized in that** the 3dB beam splitters are achieved by Y-shaped beam splitters or 1 × 2 multimode interferometer beam splitters.

8. The double-layer Sin-based integrated driver chip for optical gyroscopes as claimed in claim 1, **characterized in that** the polarizer is of a bent waveguide structure with a fixed bending radius or a continuous curvature.

9. The double-layer SiN-based integrated driver chip for optical gyroscopes as claimed in claim 1, **characterized in that** the interlayer vertical couplers are of upside-down taper structures that enable coupling of light between an upper SiN waveguide and a lower SiN-electro-optic material hybrid waveguide.

10. The double-layer SiN-based integrated driver chip for optical gyroscopes as claimed in claim 1, **characterized in that** the first phase shifter and the second phase shifter achieve phase modulation under a linear electro-optic effect of heterogeneously integrated thin-film electro-optic materials, which are of hybrid SiN waveguide structures with bottom-bonded electro-optic material thin-film layers.
